# EUROPEAN PATENT APPLICATION

(11) **EP 4 002 250 A1**
(43) Date of publication of application: **25.05.2022**
(21) Application number: 21193053.2
(22) Date of filing: 25.08.2021
(51) Int. Cl.: G06Q 20/38, G06Q 20/22

(54) **SECURE PEER-TO-PEER TRANSACTIONS USING A BLOCKCHAIN NETWORK**

(30) Priority: 12.11.2020 US 202063112804 P
(71) Applicant: Fazliu, Arber, 1000 Tirana (AL); Fazliu, Kastriot, 1000 Prishtina, Kosovo (ZZ)
(72) Inventor: Fazliu, Arber, 1000 Tirana (AL); Fazliu, Kastriot, 1000 Prishtina, Kosovo (ZZ)
(74) Representative: Kurig, Thomas

(57) **Abstract**

A method and system for securing a peer-to-peer transaction between first and second computing devices includes: generating, using a blockchain network, digital tokens in an equivalent amount to fiat currency for making the peer-to-peer transaction; storing the digital tokens in a first digital wallet installed on the first computing device; receiving a request associated with the peer-to-peer transaction from the first computing device concerning a transfer of one or more of the digital tokens from the first digital wallet to a second digital wallet installed on the second computing device; validating the request by the blockchain network and, upon successful validation, storing data related to the peer-to-peer transaction on a distributed public ledger in a form of a blockchain; and transmitting a response to the first computing device instructing transfer of the one or more of the digital tokens to the second digital wallet of the second computing device.

## Description

### BACKGROUND

The present invention relates generally to the electrical, electronic and computer arts, and, more particularly, to secure transactions using a blockchain network.

An important objective of blockchain technology is to allow digital information to be recorded and distributed, but not edited. Blockchain is primarily used to store data about monetary transactions, but it provides an equally reliable mechanism for storing data about other types of transactions as well, including data involving property exchanges, stops in a supply chain, medical records of patients, and even votes for a candidate. In essence, blockchain is an effective means of securing peer-to-peer transactions between two or more computing devices.

### SUMMARY

The present invention, as manifested in one or more embodiments thereof, beneficially provides a method, apparatus and system for providing secure peer-to-peer transactions between two or more computing devices using a blockchain network.

The use of cash for financial transactions is a great burden for both citizens and banks or other financial institutions; it adds a tremendous operational effort, it adds risk, and it is more difficult to perform large transactions. Furthermore, with traditional cash, once the person withdraws cash from the bank, there is essentially no traceability regarding what transactions are made with that cash. For example, with cash, people can buy legal, illegal, and corruptive goods and services. Embodiments of the present invention provide a means to replace cash with digital tokens that enable redundant traces worldwide in all blockchain nodes. This enables better accounting, drastically improved anti-money laundry (AML), and opens the window for many use cases, such as real estate purchases verification, originations, remittances, etc.

Currently, financial transactions are stand-alone and are vaguely linked to what they cover legally and operationally (usually linked with a comment information). Embodiments of the invention provide a method, medium and system that embeds enforcement of legal agreements and operational actions within the financial transaction itself through smart contracts technology and digital escrow agreements, among other safeguards.

In accordance with one embodiment of the invention, an exemplary method of securing a peer-to-peer transaction between a first computing device and a second computing device includes: generating, using a blockchain network, digital tokens in an equivalent amount to fiat currency for making the peer-to-peer transaction; storing, using a blockchain network, the digital tokens in a first digital wallet installed on the first computing device; receiving, by the blockchain network, a request associated with the peer-to-peer transaction from the first computing device concerning a transfer of one or more (whole number or fractions) of the digital tokens from the first digital wallet to a second digital wallet installed on the second computing device; validating the request by the blockchain network and, upon successful validation, storing using the blockchain network, data related to the peer-to-peer transaction on a distributed public ledger in a form of a blockchain; and transmitting, using the blockchain network, a response to the first computing device instructing transfer of the one or more of the digital tokens, in whole numbers or fractions thereof, to the second digital wallet of the second computing device.

In accordance with another embodiment of the invention, an exemplary system for securing a peer-to-peer transaction between a first computing device and a second computing device includes at least one processor and memory coupled with the processor. The memory includes at least one smart contract storing a plurality of instructions that, when executed by the processor, cause the processor: to generate, using a blockchain network, digital tokens in an equivalent amount to fiat currency for making the peer-to-peer transaction; to store, using the blockchain network, the digital tokens in a first digital wallet installed on the first computing device; to receive, by the blockchain network, a request associated with the peer-to-peer transaction from the first computing device concerning a transfer of one or more of the digital tokens from the first digital wallet to a second digital wallet installed on the second computing device; to apply instructions stored in smart contract as part of the blockchain network; to validate the request by the blockchain network and, upon successful validation, to store using the blockchain network, data related to the peer-to-peer transaction on a distributed public ledger in a form of a blockchain; and to transmit, using the blockchain network, a response to the first computing device instructing transfer of the one or more digital tokens to the second digital wallet of the second computing device.

As may be used herein, "facilitating" an action includes performing the action, making the action easier, helping to carry the action out, or causing the action to be performed. Thus, by way of example and not limitation, instructions executing on one processor might facilitate an action carried out by instructions executing on a remote processor, by sending appropriate data or commands to cause or aid the action to be performed. For the avoidance of doubt, where an actor facilitates an action by other than performing the action, the action is nevertheless performed by some entity or combination of entities.

One or more embodiments of the invention or elements thereof can be implemented in the form of means for carrying out one or more of the method steps described herein; the means can include (i) hardware module(s), (ii) software and/or software module(s) stored in a computer readable storage medium (or multiple such media) and implemented on a hardware processor, or (iii) a combination of (i) and (ii); any of (i)-(iii) implement the specific techniques set forth herein.

Techniques according to embodiments of the present invention provide substantial beneficial technical effects. By way of example only and without limitation, one or more embodiments provide techniques for providing secure peer-to-peer transactions between two or more computing devices using a blockchain network, which include one or more of the following advantages, among other benefits:
- technology, medium, system and methods to outweigh disadvantages of current payment systems to perform instant peer-to-peer payments and transfers, avoiding the use of cash, reducing operational effort, reducing risk, enabling transactions of any volume and making transactions traceable;
- enables tokenization of fiat currency or any other asset to make them easily transferable or exchangeable;
- provides resilient and decentralized real-time clearing and settlement of transactions performed via smart contract, validated and stored in a distributed ledger.

These and other features and advantages will become apparent from the following detailed description of illustrative embodiments thereof, which is to be read in connection with the accompanying drawings.

### BRIEF DESCRIPTION OF THE SEVERAL VIEWS OF THE DRAWINGS

Non-limiting and non-exhaustive embodiments of the present invention will be described with reference to the following drawings which are presented by way of example only, wherein like reference numerals (when used) indicate corresponding elements throughout the several views unless otherwise specified, and wherein:
FIG. 1 is a flow diagram depicting at least a portion of an exemplary method for securing a peer-to-peer transaction between two or more computing devices using a blockchain network, according to an embodiment of the present invention;
FIG. 2 is a block diagram that conceptually depicts an analogy between a user exchanging fiat currency with a merchant through a partner bank or financial institution in a traditional manner, and a digital wallet of a user exchanging digital tokens directly with a merchant using a blockchain network, according to an embodiment of the present invention;
FIG. 3 is a block diagram conceptually depicting a direct transfer and/or payment of digital tokens using a blockchain network, according to an embodiment of the present invention;
FIG. 4 is a block diagram conceptually depicting an exemplary process of purging of digital tokens by a financial institution after withdrawal of the corresponding fiat currency, according to an embodiment of the present invention;
FIG. 5 is a block diagram conceptually depicting an exemplary method for implementing a tokenization of fiat currency using a blockchain network, according to an embodiment of the present invention;
FIG. 6 is a block diagram conceptually depicting an implementation of an exemplary smart contract using a blockchain network, according to an embodiment of the present invention; and
FIG. 7 is a block diagram depicting at least a portion of an illustrative computing system suitable for executing program code related to the proposed methods, according to an embodiment of the present invention.

It is to be appreciated that elements in the figures are illustrated for simplicity and clarity. Common but well-understood elements that may be useful or necessary in a commercially feasible embodiment may not be shown in order to facilitate a less hindered view of the illustrated embodiments.

### DETAILED DESCRIPTION

Principles of the present disclosure will be described herein in the context of illustrative methods, apparatus and systems for securing peer-to-peer transactions between two or more computing devices using a blockchain network. Embodiments of the invention are particularly well-suited to financial transaction systems and/or other secure systems applications. It is to be appreciated, however, that the specific methods and/or apparatus illustratively shown and described herein are to be considered exemplary as opposed to limiting. Rather, it will become apparent to those skilled in the art given the teachings herein that numerous modifications can be made to the embodiments shown that are within the scope of the appended claims. That is, no limitations with respect to the embodiments shown and described herein are intended or should be inferred.

As previously stated, blockchain technology allows digital information to be recorded and distributed, but not edited. Although blockchain has found considerable benefit in financial applications for storing data about monetary transactions, it provides an equally reliable mechanism for storing data involving nearly any secure transactions as well, including, but not limited to, data involving property exchanges, stops in a supply chain, medical records of patients, and even votes for a candidate. Blockchain is therefore an effective means of securing peer-to-peer transactions between two or more computing devices.

As will be known by those skilled in the art, "blocks" on a blockchain are comprised of digital pieces of information and include three basic functions: (i) storing information about transactions; (ii) storing information about the parties participating in the transactions; and (iii) storing information that distinguishes one block from other blocks in the blockchain (by storing a unique code called a "hash"). In order for a block to be added to the blockchain, a transaction must occur, the transaction must be verified, the transaction must be stored in a block, and the block must be given a hash. The block is also given the hash of the most recent block added to the blockchain. Once hashed, the block can be added to the blockchain.

New blocks are always stored linearly and chronologically; that is, they are always added to the end of the blockchain. After a block has been added to the end of the blockchain, it is very difficult to go back and alter the contents stored therein. That is because each block contains its own hash, along with the hash of the block preceding it. If the information in the block changes, its hash code changes as well. Therefore, in order to change a single block, a hacker would need to change every single block after it on the blockchain, which would take an almost improbable amount of computing power. As an added measure of security, there are numerous copies of the blockchain maintained by users in the blockchain network. These copies of the blockchain are updated whenever a new block of transactions is added.

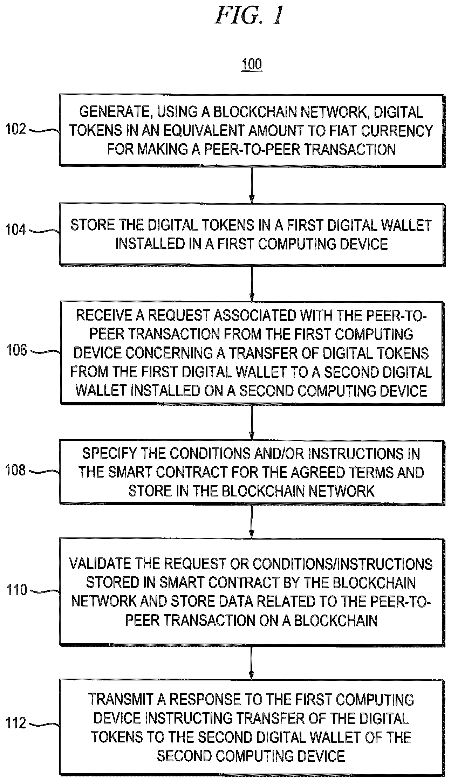

FIG. 1 is a flow diagram depicting at least a portion of an exemplary method 100 for securing a peer-to-peer transaction between two or more computing devices using a blockchain network, according to an embodiment of the invention. The method 100 includes generating, using a blockchain network, digital tokens in an equivalent amount to fiat currency for making a peer-to-peer transaction in step 102. In step 104, the digital tokens are stored, using the blockchain network, in a first digital wallet residing in a first computing device.

*Digital tokens* are generally either intrinsic or created by software and assigned a certain utility. Examples of intrinsic digital tokens include Bitcoin and Ether. The other type of digital token is asset-backed, which is issued to represent a claim on a redeemable asset such as legal tender or precious metals. Traditionally, commodity money has an intrinsic value that is derived from the materials it is made of, such as gold and silver coins.

By contrast, *fiat currency* has no intrinsic value; it is essentially a promise from a government or central bank that the currency is capable of being exchanged for its value in goods. In one or more embodiments, the fiat currency is preferably deposited in a financial institution of a user of the first digital wallet, and digital tokens in an equivalent amount to the fiat currency are generated, using the blockchain network, and stored in the first digital wallet.

The blockchain network, in one or more embodiments, comprises a peer-to-peer network that includes a plurality of distributed blockchain nodes. Each of the distributed nodes may comprise a computing system, for example including at least one processor and a memory coupled to the processor. Upon completion of the peer-to-peer transaction, a block containing transaction data is added to the blockchain stored on each of the plurality of distributed blockchain nodes.

With continued reference to FIG. 1, in step 106 a request associated with the peer-to-peer transaction is received from the first computing device concerning a transfer of digital tokens, in whole numbers or fractions thereof, from the first digital wallet to a second digital wallet installed on a second computing device. In one or more embodiments, the first computing device wirelessly transmits the peer-to-peer transaction. In step 108, conditions and/or instructions in a smart contract are specified for agreed terms and are stored in the blockchain network. A *smart contract* is a computer program or a transaction protocol that is configured to automatically execute, control or document legally relevant events and actions according to prescribed terms of a contract or an agreement. Instructions stored in the smart contract may comprise conditions for transfer and/or payment, including but not limited to conditions for escrow of payment/transfer, conditions for reversal of the transaction within a prescribed safety period, and conditions for exchange of currencies.

Step 110 validates the request or conditions/instructions stored in the smart contract by the blockchain network and stores data related to the peer-to-peer transaction on a blockchain. In step 112, a response is transmitted to the first computing device instructing a transfer of the digital tokens to the second digital wallet of the second computing device, thereby completing the peer-to-peer transaction. Transmission of the response to the first computing device may be performed wirelessly (e.g., radio frequency (RF), optically, infrared, etc.) or via a wired communication means (e.g., Ethernet, cable, etc.).

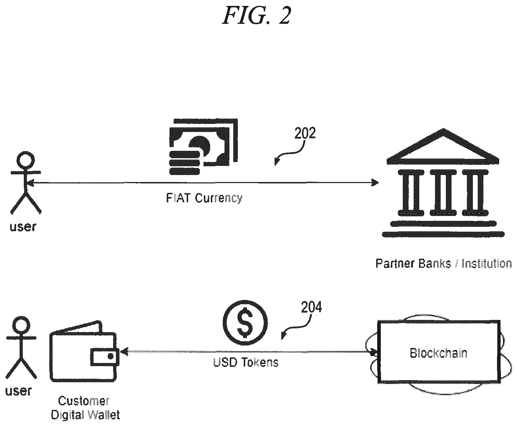

FIG. 2 is a block diagram that conceptually depicts an analogy between a user exchanging fiat currency with a merchant through a partner bank or financial institution in a traditional manner 202, and a digital wallet of a user exchanging digital tokens directly with a merchant using a blockchain network 204, according to an embodiment of the invention. The peer-to-peer transaction includes sending a payment to a merchant, transferring the fiat currency, and withdrawing the fiat currency. Withdrawing the fiat currency can be performed, in one or more embodiments, by transmitting one or more (in whole numbers or fractions) digital tokens to a financial institution of the user of the first digital wallet. An amount of the one or more digital tokens are preferably equivalent to an amount of the fiat currency withdrawn.

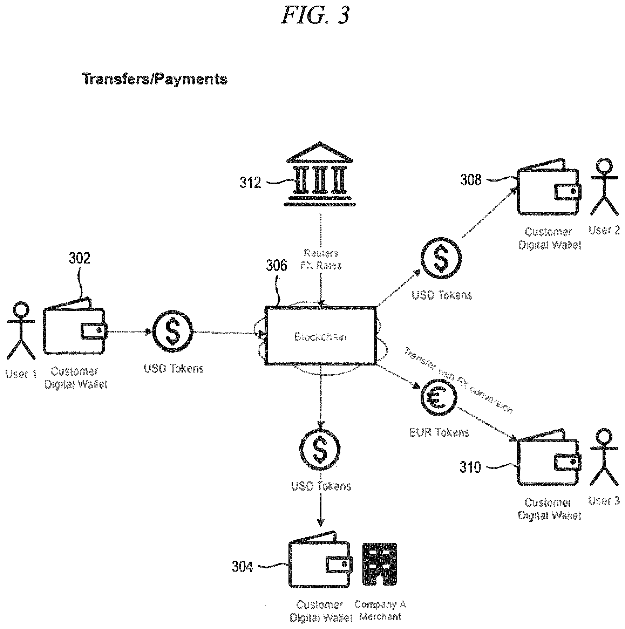

FIG. 3 is a block diagram conceptually depicting the direct transfer and/or payment of digital tokens using a blockchain network, according to an embodiment of the invention. The payment to the merchant by a first user (User 1) may be performed by transmitting one or more (in whole numbers or fractions) digital tokens from a first digital wallet 302 of the first user to a digital wallet 304 of the merchant using the blockchain network 306. Likewise, payments directly to a second user (User 2) by the first user may be performed by transmitting one or more (in whole numbers or fractions) digital tokens from the first digital wallet 302 to a second digital wallet 308 of the second user using the blockchain network 306, without going through the financial institution, thereby avoiding intermediate transaction fees and the like.

The first user can even make payments/transfers to a third user (User 3) in a different currency by transmitting one or more (in whole numbers or fractions) digital tokens from the first digital wallet 302 in a first currency (e.g., US dollars) to a third digital wallet 310 of the third user in a second currency (e.g., Euro dollars). More particularly, the exchange of currency is performed by transmitting the one or more digital tokens of a first type from the first digital wallet 302 to the blockchain network 306, and transmitting a corresponding value of digital tokens of a second type from the blockchain network to the third digital wallet 310 of the third user. The exchange rate(s) used for performing the transfer/payment may be supplied to the blockchain network 306 by a third party service 312 (e.g., WM/Reuters FX).

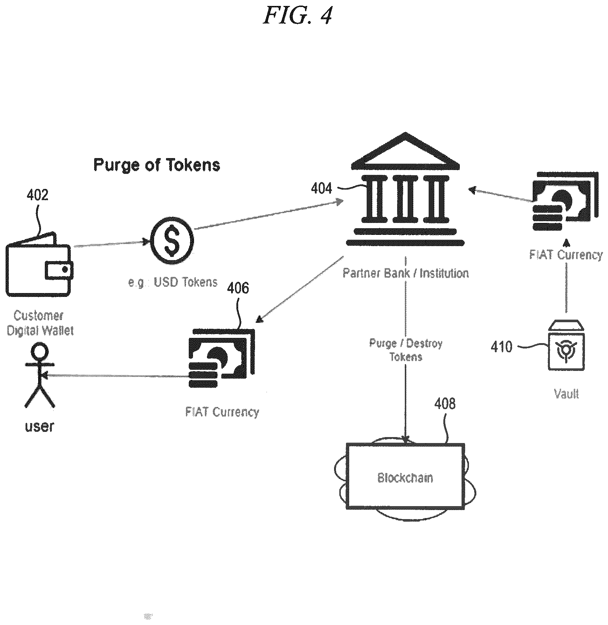

Once the fiat currency is withdrawn by the user, the financial institution purges the one or more digital tokens associated with the transaction. FIG. 4 is a block diagram conceptually depicting an exemplary process of purging of digital tokens by a financial institution after withdrawal of the corresponding fiat currency, according to an embodiment of the invention. As apparent from FIG. 4, when a user want to withdraw fiat currency from a financial institution, the user transmits one or more (in whole numbers or fractions) digital tokens from the user's digital wallet 402 to the financial institution 404 and the financial institution, in turn, provides an equivalent amount of fiat currency 406 to the user. Once the fiat currency withdrawal by the user has been completed, the financial institution purge or otherwise destroys the digital tokens in the blockchain network 408. The fiat currency, like most financial institutions, is typically stored in a vault 410 or other secure location to prevent the user from making a transaction with the fiat currency.

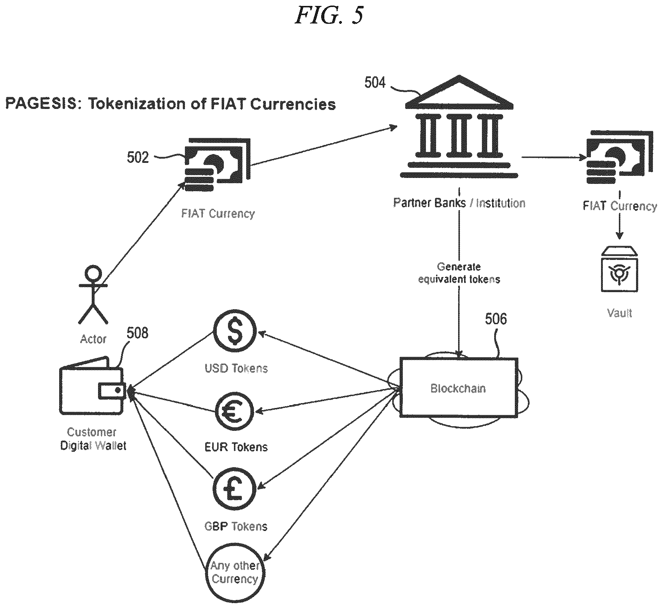

FIG. 5 is a block diagram conceptually depicting an exemplary method for implementing a tokenization of fiat currency using a blockchain network, according to an embodiment of the invention. In the illustrative embodiment shown in FIG. 5, a user provides fiat currency 502 to a financial institution 504 with a request to exchange the fiat currency with an equivalent amount of digital tokens. The financial institution then transmits the transaction request to the blockchain network 506. In response, the blockchain network 506 transmits an amount of digital tokens to a digital wallet 508 of the user equivalent to the amount of fiat currency supplied to the financial institution 504. The digital tokens transferred to the user's digital wallet 508 may be in one or multiple currency types (e.g., US dollar tokens, Euro dollar tokens, GBP tokens, etc.).

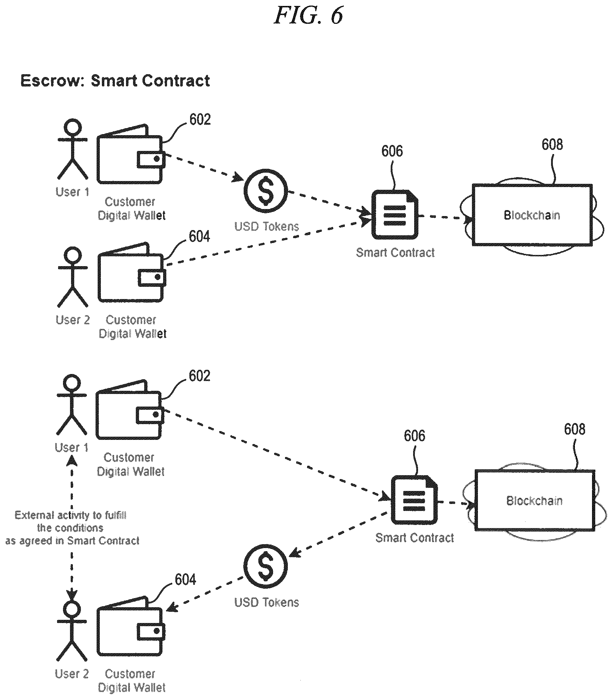

FIG. 6 is a block diagram conceptually depicting an implementation of an exemplary smart contract using a blockchain network, according to an embodiment of the invention. In this example, a first user (User 1) with their associated digital wallet 502 and a second user (User 2) with their associated digital wallet 504, agree to prescribed terms of a smart contract 506. The smart contract 506 is stored in or is otherwise in communication with a blockchain network 508. In this illustration, the first user transfers digital tokens from their digital wallet 502 to the smart contract 506 which stores the transaction in the blockchain 508. Upon the performance of certain external activity by or between the first and second users to fulfill the conditions specified in the smart contract 506, payment in the form of digital tokens is provided to the digital wallet 504 of the second user via the smart contract and the transaction is stored in the blockchain 508.

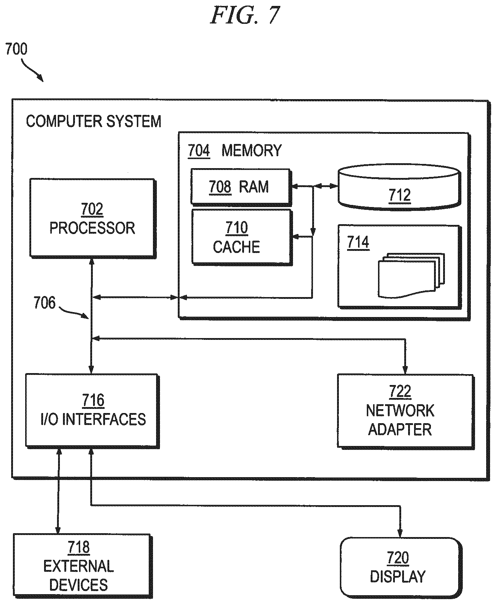

Embodiments of the invention may be implemented together with virtually any type of computer, regardless of the platform, being suitable for storing and/or executing program code. By way of example only and without limitation, FIG. 7 is a block diagram depicting at least a portion of an illustrative computing system 700 suitable for executing program code configured for implementing at least a portion of the proposed method(s) described herein.

The computing system 700 is only one example of a suitable computer system and is not intended to suggest any limitation as to the scope of use or functionality of embodiments of the invention described herein, regardless, whether the computer system 700 is capable of being implemented and/or performing any of the functionality set forth hereinabove. In the computer system 700, there are components, which are adapted for connection to and operational with numerous other general-purpose or special-purpose computing system environments or configurations. Examples of well-known computing systems, environments, and/or configurations that may be suitable for use with computer system 700 include, but are not limited to, personal computer systems, server computer systems (i.e., servers), thin clients, thick clients, hand-held or laptop devices, multiprocessor systems, microprocessor-based systems, programmable consumer electronics, network PCs, minicomputer systems, mainframe computer systems, and distributed cloud computing environments that include any of the above systems or devices, and the like. The computer system 700 may be described in the general context of computer system-executable instructions, such as program modules, being executed by the computer system 700. Generally, program modules may include routines, programs, objects, components, logic, data structures, and so on that perform particular tasks or implement particular abstract data types. The computer system 700 may be practiced in distributed cloud computing environments where tasks are performed by remote processing devices that are linked through a communications network. In a distributed cloud computing environment, program modules may be located in both local and remote computer system storage media, including memory storage devices.

As apparent from FIG. 7, the computer system 700 is shown in the form of a general-purpose computing device. It is to be appreciated that the general-purpose computing device, once configured to perform methods according to embodiments of the inventions, effectively becomes a special-purpose apparatus. Components of computer system 700 may include, but are not limited to, one or more processors or processing units 702, a system memory 704, and a bus 706 that couples various system components including the system memory 704 to the processor 702. Bus 706 represents one or more of any of several types of bus structures, including a memory bus or memory controller, a peripheral bus, an accelerated graphics port, and a processor or local bus using any of a variety of bus architectures. By way of example, and not limiting, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus. Computer system 700 typically includes a variety of computer system readable media. Such media may be any available media that is accessible by computer system 700, and it includes both volatile and non-volatile media, removable and non-removable media.

The system memory 704 may include computer system readable media in the form of volatile memory, such as random-access memory (RAM) 708 and/or cache memory 710. The computer system 700 may further include other removable/non-removable, volatile/non-volatile computer system storage media. By way of example only, a storage system 712 may be provided for reading from and writing to a non-removable, non-volatile magnetic media (not shown and typically called a "hard drive"). Although not explicitly shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media may be provided. In such instances, each can be connected to the bus 706 by one or more data media interfaces. As will be further depicted and described below, the memory 704 may include at least one program product having a set (e.g., at least one) of program modules 714 that are configured to carry out functions in accordance with embodiments of the invention.

The program/utility, having a set (at least one) of program modules 714, may be stored in the memory 704 by way of example, and not limiting, as well as an operating system, one or more application programs, other program modules, and program data. Each of the operating systems, one or more application programs, other program modules, and program data or some combination thereof, may include an implementation of a blockchain and/or other network. The program modules 714 generally carry out the functions and/or methodologies of embodiments of the invention, as described herein.

The computer system 700 may also include one or more input/output (I/O) interfaces 716 for communicating with one or more external devices 718 (e.g., keyboard or pointing device), a display 720, etc.; one or more devices that enable a user to interact with the computer system 700; and/or any devices (e.g., network card, modem, etc.) that enable the computer system 700 to communicate with one or more other computing devices. Still yet, the computer system 700 may communicate with one or more networks such as a local area network (LAN), a general wide area network (WAN), and/or a public network (e.g., the Internet) via a network adapter 722. As depicted, the network adapter 722 may communicate with the other components of the computer system 700 via the bus 706. Although not explicitly shown, other hardware and/or software components could be used in conjunction with the computer system 700. Examples, include, but are not limited to: microcode, device drivers, redundant processing units, external disk drive arrays, redundant array of independent disks (RAID) systems, tape drives, and data archival storage systems, etc.

The descriptions of the various embodiments of the present invention have been presented for purposes of illustration, but are not intended to be exhaustive or limited to the embodiments disclosed. Modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

As previously stated, embodiments of the present invention, or portions thereof, may be implemented in the form of a system, a method, and/or a computer program product. In one or more embodiments, the computer program product may include a non-transitory computer readable storage medium (or media) having computer readable program instructions thereon for causing a processor or other controller, such as, for example, the processing unit 702 shown in FIG. 7, to carry out aspects of the present invention.

The computer readable storage medium can be any tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network (LAN), a wide area network (WAN) and/or a wireless network (e.g., wireless LAN (WLAN)). The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or a WAN, or the connection may be made to an external computer (for example, through the Internet using an Internet Service Provider). In some embodiments, electronic circuitry including, for example, programmable logic circuitry, field-programmable gate arrays (FPGAs), or programmable logic arrays (PLAs) may execute the computer readable program instructions by utilizing state information of the computer readable program instructions to personalize the electronic circuitry, in order to perform aspects of the present invention.

Aspects of the present invention are described herein with reference to a flowchart illustration and/or block diagrams of methods, apparatus (systems), and computer program products according to embodiments of the invention. It will be understood that each of at least a subset of blocks of the flowchart illustration and/or block diagrams, and combinations of blocks in the flowchart illustration and/or block diagrams, can be implemented by computer readable program instructions.

These computer readable program instructions may be provided to one or more processors of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block(s).

The flowchart and block diagrams in the accompanying figures illustrate the architecture, functionality, and operation of possible implementations of systems, methods, and computer program products according to one or more embodiments of the invention. In this regard, each of at least a subset of the blocks in the block diagrams and/or flowchart illustration may represent a module, segment, or portion of instructions, which comprises one or more executable instructions for implementing the specified function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that in one or more embodiments, each of at least a subset of blocks in the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be appreciated that, to the extent that such terms are used herein, where an element is referred to as being "connected" or "coupled" to another element, it can be directly connected or coupled to the other element or intervening elements can be present. In contrast, when an element is referred to as being "directly connected" or "directly coupled" to another element, there are no intervening elements present. Furthermore, positional terms such as "above," "below," "upper" and "lower," when used, are intended to indicate relative positioning of elements or structures to each other as opposed to absolute position.

The illustrations of embodiments of the invention described herein are intended to provide a general understanding of the various embodiments, and they are not intended to serve as a complete description of all the elements and features of apparatus and systems that might make use of the structures and semiconductor fabrication methodologies described herein. Many other embodiments will become apparent to those skilled in the art given the teachings herein; other embodiments are utilized and derived therefrom, such that structural and logical substitutions and changes can be made without departing from the scope or spirit of this disclosure. The drawings are also merely representational and are not drawn to scale. Accordingly, the specification and drawings are to be regarded in an illustrative rather than a restrictive sense.

Embodiments of the invention are referred to herein, individually and/or collectively, by the term "embodiment" merely for convenience and without intending to limit the scope of this application to any single embodiment or inventive concept if more than one is, in fact, shown. Thus, although specific embodiments have been illustrated and described herein, it should be understood that an arrangement achieving the same purpose can be substituted for the specific embodiment(s) shown; that is, this disclosure is intended to cover any and all adaptations or variations of various embodiments. Combinations of the above embodiments, and other embodiments not specifically described herein but within the scope of the present invention, will become apparent to those of skill in the art given the teachings herein.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," and/or "comprising," when used in this specification, specify the presence of stated features, steps, operations, elements, and/or components, but do not preclude the presence or addition of one or more other features, steps, operations, elements, components, and/or groups thereof.

The corresponding structures, materials, acts, and equivalents of all means or step-plus-function elements in the claims below are intended to include any structure, material, or act for performing the function in combination with other claimed elements as specifically claimed. The description of the various embodiments has been presented for purposes of illustration and description, but is not intended to be exhaustive or limited to the forms disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the various embodiments with various modifications as are suited to the particular use contemplated.

The abstract is provided to comply with 37 C.F.R. § 1.72(b), which requires an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the appended claims reflect, inventive subject matter lies in less than all features of a single embodiment. Thus the following claims are hereby incorporated into the Detailed Description, with each claim standing on its own as separately claimed subject matter.

Given the teachings of embodiments of the present invention provided herein, one of ordinary skill in the art will be able to contemplate other implementations and applications of the techniques of embodiments of the invention. Although illustrative embodiments of the invention have been described herein with reference to the accompanying drawings, it is to be understood that embodiments of the invention are not limited to those precise embodiments, and that various other changes and modifications are made therein by one skilled in the art without departing from the scope of the appended claims.

## Claims

1. A method (100) of securing a peer-to-peer transaction between a first computing device and a second computing device, the method comprising:
generating (102), using a blockchain network (306, 408, 506, 608), digital tokens in an equivalent amount to fiat currency (406, 502), for making the peer-to-peer transaction;
storing (104), using the blockchain network, the digital tokens in a first digital wallet (302) installed on the first computing device;
receiving (106), by the blockchain network, a request associated with the peer-to-peer transaction from the first computing device concerning a transfer of one or more of the digital tokens, in whole numbers or fractions thereof, from the first digital wallet to a second digital wallet (304, 308, 310) installed on the second computing device;
validating the request (110) by the blockchain network and, upon successful validation, storing using the blockchain network, data related to the peer-to-peer transaction on a distributed public ledger in a form of a blockchain; and
transmitting (112), using the blockchain network, a response to the first computing device instructing transfer of the one or more of the digital tokens, in whole numbers or fractions thereof, to the second digital wallet of the second computing device.

2. The method of claim 1, wherein the blockchain network is a peer-to-peer network which includes a plurality of distributed blockchain nodes, and wherein each of the plurality of distributed nodes is a computing system (700).

3. The method of claim 2, wherein, upon completion of the peer-to-peer transaction, a block containing transaction data is added to the blockchain stored on each of the plurality of distributed blockchain nodes.

4. The method of claim 1, wherein the fiat currency is deposited in a financial institution of a user of the first digital wallet, and digital tokens in an equivalent amount to fiat currency are generated, using a blockchain network, and stored on first digital wallet, and wherein the fiat currency is saved in a vault (410) of the financial institution (504) to prevent the user from making a transaction with the fiat currency.

5. The method of claim 1, wherein the peer-to-peer transaction includes sending a payment to a merchant, transferring the fiat currency, and withdrawing the fiat currency.

6. The method of claim 5, wherein the payment to the merchant is performed by transmitting the one or more digital tokens, in whole numbers or fractions thereof, from the first digital wallet to a digital wallet of the merchant.

7. The method of claim 5, wherein the transferring of the fiat currency is performed by transmitting the one or more digital tokens, in whole numbers of fractions thereof, from the first digital wallet to the second digital wallet, or wherein the transferring of the fiat currency is performed by transmitting the one or more digital tokens, in whole numbers or fractions thereof, of a first type from the first digital wallet to the blockchain network, and transmitting a corresponding value of digital tokens of a second type from the blockchain network to the second digital wallet.

8. The method of claim 5, wherein withdrawing the fiat currency is performed by transmitting the one or more digital tokens, in whole numbers or fractions thereof, to a financial institution of a user of the first digital wallet.

9. The method of claim 8, wherein an amount of the one or more digital tokens is equivalent to an amount of the fiat currency for withdrawal, or wherein once the fiat currency is withdrawn by the user, the financial institution purges the one or more digital tokens.

10. The method of claim 1, wherein each of the first and second computing devices comprises at least one of a personal computer, a mobile phone, a tablet, a personal digital assistant, and any other devices having connectivity or computational capability, and wherein the first computing device wirelessly transmits the peer-to-peer transaction.

11. A system (FIGs. 3-5) for securing a peer-to-peer transaction between a first computing device and a second computing device, the system comprising:
at least one processor (702); and
a memory (704) coupled with the processor, the memory including a smart contract (606) storing a plurality of instructions that, when executed by the processor, cause the processor to:
generate (102), using a blockchain network (306, 408, 506, 608), digital tokens in an equivalent amount to fiat currency (406, 502) for making the peer-to-peer transaction;
store (104), using the blockchain network, the digital tokens in a first digital wallet (302) associated with the first computing device;
receive (106), via the blockchain network, a request associated with the peer-to-peer transaction from the first computing device concerning a transfer of one or more of the digital tokens from the first digital wallet to a second digital wallet (304, 308, 310) associated with the second computing device;
apply instructions stored in at least one smart contract (606) as part of the blockchain network;
validate the request (110) by the blockchain network and, upon successful validation, to store, using the blockchain network, data related to the peer-to-peer transaction on a distributed public ledger in a form of a blockchain; and
transmit (112), using the blockchain network, a response to the first computing device instructing transfer of the one or more of the digital tokens to the second digital wallet of the second computing device.

12. The system of claim 11, wherein the blockchain network comprises a peer-to-peer network which includes a plurality of distributed blockchain nodes, and wherein each of the first and second computing devices comprises at least one of a personal computer, a mobile phone, a tablet, a personal digital assistant, and any other device having connectivity or computational capability, and wherein the first computing device wirelessly transmits the peer-to-peer transaction.

13. The system of claim 12, wherein, upon completion of the peer-to-peer transaction, a block containing transaction data is added to the blockchain stored on each of the plurality of distributed blockchain nodes, and wherein each of the plurality of distributed nodes comprises a computing system.

14. The system of claim 11, wherein instructions stored in the smart contract comprise conditions for transfer or payment, and wherein transactions conditioned through the smart contract include at least one condition to be fulfilled in order for the transaction to be completed.

15. The system of claim 11, wherein instructions stored in the smart contract comprise conditions for escrow of payment or transfer, wherein instructions stored in the smart contract comprise conditions for reversing the transaction within a safety period, or wherein instructions stored in the smart contract comprise conditions for exchange of currencies.
